# EUROPEAN PATENT APPLICATION

(11) **EP 1 703 484 A2**
(43) Date of publication of application: **20.09.2006**
(21) Application number: 06251337.9
(22) Date of filing: 14.03.2006
(51) Int. Cl.: G09C 1/04

(54) **Storage device for personal identification numbers.**

(30) Priority: 15.03.2005 GB 0505291
(71) Applicant: Integral International Limited, St Albans Hertfordshire AL1 4TL (GB)
(72) Inventor: Holloway, Richard, 29 Beaumont Avenue, St., Albans, AL1 4TL (GB)
(74) Representative: Weitzel, David Stanley

(57) **Abstract**

It is common to possess several credit or debit cards and although the PINs for some may be changeable, that is not always the case. Even when a PIN can be changed, the act of doing so is an inconvenience. It is desirable to provide a device for storing a plurality of PINs.

A device for storing PINs is disclosed having a body in which a plurality of carriers, each having a writing surface, are mounted to be separately movable between a plurality of positions. The body has a writing surface against which the carrier writing surfaces can be aligned. In use, the carriers are moved to random positions and a plurality of PINs is written onto them, one digit on each carrier and a label to identify the card to which each PIN relates is written onto the writing surface of the body, in alignment with the PIN. Blank spaces on the carriers are then filled with random numbers and the carriers are repositioned. To retrieve (all) the PINs, the carriers are set to the original random positions and the PINs can then be read off against their labels. One way of setting the carriers to their original random positions is to remember one PIN or some other code and to set the carriers so that the PIN or other code is aligned with its label.

## Description

This invention relates to devices for storing PINs or personal identification numbers.

It is known to write a PIN into an array of cells in a (hopefully) memorable subset of the cells, e.g. on the diagonal, then to fill the remaining (empty) cells with random numbers. The PIN can thus be retrieved only by remembering the subset in which it is stored. It is common to possess several credit or debit cards and although the PINs for some may be changeable, that is not always the case. Even when a PIN can be changed, the act of doing so is an inconvenience. It is desirable to provide a device for storing a plurality of PINs.

Against this background, there is provided a device for storing PINs, comprising a body in which a plurality of carriers, each having a writing surface, are mounted to be separately movable between a plurality of positions, the body having a writing surface against which the carrier writing surfaces can be aligned. In use, the carriers are moved to random positions and a plurality of PINs is written onto them, one digit on each carrier and a label to identify the card to which each PIN relates is written onto the writing surface of the body, in alignment with the PIN. Blank spaces on the carriers are then filled with random numbers and the carriers are repositioned. To retrieve (all) the PINs, the carriers are set to the original random positions and the PINs can then be read off against their labels. One way of setting the carriers to their original random positions is to remember one PIN or some other code and to set the carriers so that the PIN or other code is aligned with its label.

To facilitate use, the writing surface of each carrier may be divided into a plurality of segments and the writing surface of the body, also divided into a plurality of segments such that a carrier-segment may be aligned with a body-segment.

Each carrier may include a display surface in addition to its writing surface, each display surface having a plurality of different marks, so that a mark on one carrier may be aligned with the (same or different) marks on other carriers to set relative positions of the carriers. In use, the initial random positions are set by aligning the marks to a rememberable combination.

If the marks are alphanumeric characters the rememberable combination may be a PIN.

In one form, the carriers each comprise a strip slidable in the body.

In that form the carrier-writing surfaces may be visible, and may be written on, through a window or windows in the body.

Each display surface may then be on a side of its strip, opposite that providing the writing surface, and is visible through a window in the body.

One embodiment of the invention will now be described, by way of example, with reference to the accompanying drawings, in which:
Figure 1 is a plan view of the front of a device for storing PINs embodying the invention, with its carriers fully retracted;
Figure 2 is a plan view of the rear of the device of Figure 1 with its carriers extended to random positions;
Figure 3 is a plan view of the front of the device as shown in Figure 2; and
Figure 4 is a plan view of the device showing its body partly unfolded.

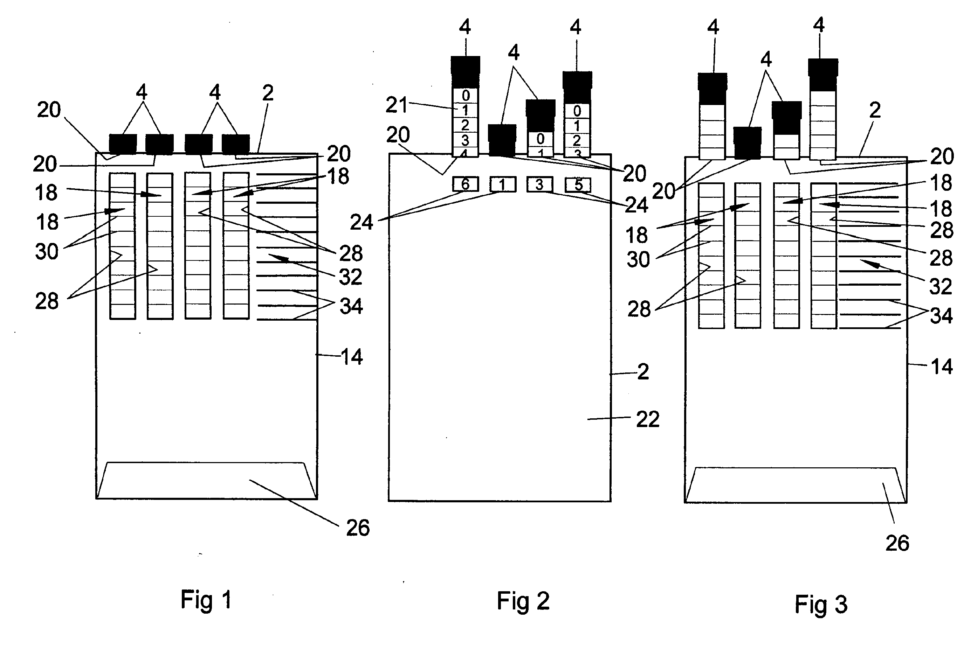

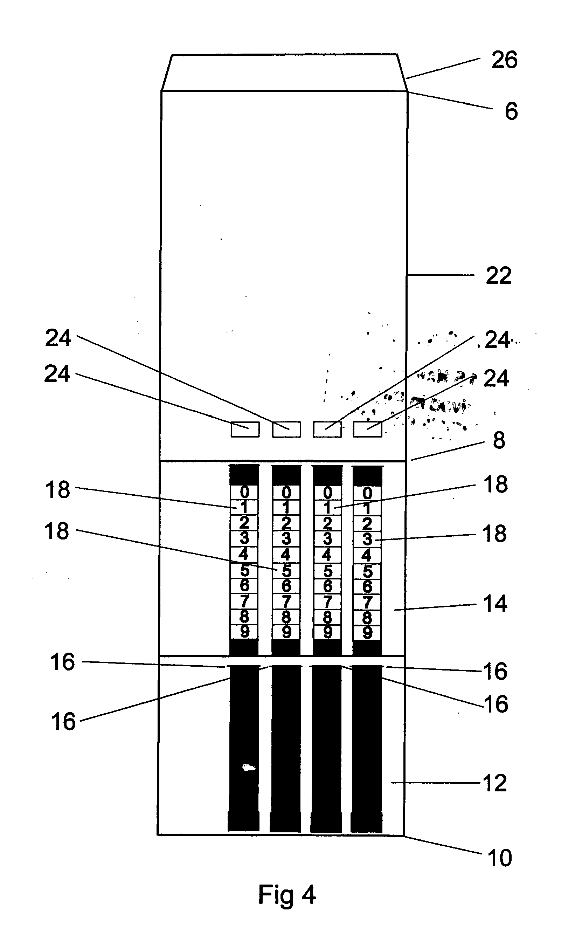

Referring to the drawings, a device for storing PINs has a body 2 and four carriers 4. Referring to Figure 4, the body 2 is folded from card along lines 6, 8 and 10. First a short segment 12 is folded over a longer segment 14 along the line 10. The segment 12 has four slots 16 each for slidably receiving a respective carrier 4 which is in the form of a strip 18 of card. The strips 18 also extend slidably through respective slots 20 along the fold line 8. The card is folded along the line 8 so that a segment 22 overlies the segments 12 and 14 and so that windows 24 in the segment 22 lie over respective strips 18. The card is then folded along line 6 to bring a tab over the other side of the segment 14 (as seen in Figure 4) to which it is adhered. As may be seen from Figures 1 and 3, the segment 14 has windows 28 through which the part of the strips 18 can be seen and written on, thus constituting a writing surface 19.

The writing surface of each strip 18 is marked, e.g. by printing, with lines 30 which divide it into a plurality of segments. A plurality of these segments is visible through the windows 28 simultaneously. The segment 14 of the body 2 also has a writing surface 32 adjacent the windows 28 and divided into segments by printed lines 34 corresponding to the segments of the writing surfaces of the strips 18.

In use, to store a plurality of PINs, the strips 18 are drawn out to random positions as shown in Figures 2 and 3. A code number is written on the writing surface 19 of the strips 18 and a label is written on the corresponding segment of the writing surface 32 on the body. The code number may itself be a PIN and the label may identify the card to which the PIN relates, e.g. "CO-OP". In an alternative the code number may be any easily rememberable number, e.g. the user's date of birth, telephone number and so on.

As many PINs and labels are written as the user desires. The blank segments in the writing surfaces of the strips 18 are then filled with random numbers first by pulling the strips fully out and filling in any blanks, and then by returning them to their fully retracted position, as shown in Figure 1, and filling in any remaining blanks.

To retrieve the PINs, the strips 18 are extended so that the code number appears aligned with its identifying label. The PINs (or other PINs) can then be read off.

In a variant, the other sides 21 of the strips 18 are printed with a plurality of alphanumeric characters, numeric characters being illustrated. The windows 24 are of such a size as to show only one complete character at a time. To put the strips in their initial random positions they may be aligned so that a memorable combination appears in the window 24. In the case illustrated this would be a code number. PINs and labels are then entered as described above. To retrieve the PINs, the strips are extended until the memorable combination appears in the windows 24.

## Claims

1. A device for storing PINs, comprising a body in which a plurality of carriers, each having a writing surface, are mounted to be separately movable between a plurality of positions, the body having a writing surface against which the carrier writing surfaces can be aligned.

2. A device as claimed in claim 1, wherein the writing surface of each carrier is divided into a plurality of segments and the writing surface of the body is also divided into a plurality of segments such that a carrier-segment may be aligned with a body-segment.

3. A device as claimed in claim 1 or claim 2, wherein each carrier includes a display surface in addition to its writing surface, each display surface having a plurality of different marks, so that a mark on one carrier may be aligned with the (same or different) marks on other carriers to set relative positions of the carriers.

4. A device as claimed in claim 3, wherein the marks are alphanumeric characters.

5. A device as claimed in any preceding claim, wherein the carriers each comprise a strip slidable in the body.

6. A device as claimed in claim 5, wherein the carrier writing surfaces are visible, and may be written on, through a window or windows in the body.

7. A device as claimed in claim 6 when appendent to claim 3, wherein each display surface is on a side of its strip, opposite that providing the writing surface, and is visible through a window in the body.
